# EUROPÄISCHE PATENTSCHRIFT

(11) **EP 2 791 505 B1**
(45) Veröffentlichungstag und Bekanntmachung des Hinweises auf die Patenterteilung: **20.02.2019**
(21) Anmeldenummer: 12806006.8
(22) Anmeldetag: 11.12.2012
(51) Int. Cl.: C21D 7/00, C21D 7/02, C21D 7/04, F04B 5/00, F04B 3/00, F15B 3/00, B23P 9/00, F03C 1/007, F04B 9/113

(54) **DRUCKÜBERSETZER, VERFAHREN ZUM BETREIBEN EINES DRUCKÜBERSETZERS SOWIE VERWENDUNG EINES DRUCKÜBERSETZERS**
PRESSURE INTENSIFIER, METHOD OF OPERATING A PRESSURE INTENSIFIER, AND USE OF A PRESSURE INTENSIFIER
INTENSIFICATEUR DE PRESSION, PROCÉDÉ POUR OPÉRER UN INTENSIFICATEUR DE PRESSION, UTILISATION D'UN INTENSIFICATEUR DE PRESSION

(30) Priorität: 14.12.2011 DE 102011088594
(43) Veröffentlichungstag der Anmeldung: 22.10.2014
(73) Patentinhaber: Robert Bosch GmbH, 70442 Stuttgart (DE)
(72) Erfinder: DAUNER, Andreas, 70839 Gerlingen (DE); RUECKAUF, Andreas, 71277 Rutesheim (DE); LISCHKA, Peter, 95463 Bindlach-Ramsenthal (DE); BEETZ, Steffen, 70499 Stuttgart (DE)
(86) Internationale Anmeldenummer: PCT/EP2012/075012
(87) Internationale Veröffentlichungsnummer: WO 2013/087593

(56) Entgegenhaltungen:
- WO-A1-2004/038220
- DE-A1-102004 018 678
- DE-A1-102006 038 862
- DE-A1-102008 014 152
- DE-C1- 19 633 258
- US-A- 3 945 206

## Beschreibung

### Stand der Technik

Die Erfindung betrifft einen Druckübersetzer sowie ein Verfahren zum Betreiben eines Druckübersetzers nach den Oberbegriffen der beiden unabhängigen Ansprüche. Ferner betrifft die Erfindung die Verwendung eines erfindungsgemäßen Druckübersetzers.

Ein Druckübersetzer sowie ein Verfahren zum Betreiben eines Druckübersetzers nach den Oberbegriffen der beiden unabhängigen Ansprüche sind aus der DE 10 2008 014 152 A1 bekannt. Die Befüllung des Hochdruckraums des Druckübersetzers erfolgt bei dem bekannten Druckübersetzer mittels einer außerhalb des Gehäuses des Druckübersetzers angeordneten Verbindungsleitung, in die ein Rückschlagventil geschaltet ist. Ein derartiges Befüllen des Hochdruckraums mit ein Druckmedium ist daher relativ aufwendig und benötigt eine Ventileinrichtung (Rückschlagventil), um zu verhindern, das bei der Verdichtung des Druckmittels verdichtetes Druckmittel in die Versorgungsleitung zur Befüllung des Hochdruckraums mit Druckmittel gelangt.

Aus der WO 2004/038220 A1 und der US 3,945,206 sind darüber hinaus Druckübersetzer bekannt, bei denen der Anschluss zur Versorgung des Hochdruckraums mit Druckmittel über einen im Bereich des Hochdruckraums des Gehäuses des Druckübersetzers angeordneten Anschluss erfolgt. Da die Anschlüsse in dem Gehäuse bei den genannten Druckübersetzern jedoch in relativ großem Abstand von einem unteren Umkehrpunkt des Hochdruckkolbens angeordnet sind, benötigen auch diese Druckübersetzer in der Praxis entsprechende Ventileinrichtungen (Rückschlagventile), um zu vermeiden, dass bei der Verdichtung des Druckmittels Druckmittel in die Versorgungsleitung rückströmt.

Aus der DE 10 2004 018 678 A1 ist darüber hinaus die Verwendung eines Druckübersetzers für ein Autofrettageverfahren bekannt. Ein derartiges Verfahren dient der Einbringung von Eigenspannungen in druckbeaufschlagte Bauteile, beispielsweise zur Behandlung von Bauteilen in Kraftstoffeinspritzsystemen. Bei der zur Diskussion stehenden Bearbeitung der Bauteile wird die Oberfläche des Bauteils, abhängig von dem Material des Bauteils sowie der Höhe der Druckbeaufschlagung, bis zu einer bestimmten Tiefe plastifiziert.

Bei aus der Praxis bekannten Druckübersetzer weist ein Druckübersetzergehäuse auf, in dem zwei, über eine Kolbenstange starr miteinander verbundene Kolben längsbeweglich beweglich angeordnet sind. Innerhalb des Druckübersetzergehäuses begrenzen die einander gegenüberliegenden Druckflächen der beiden Kolben einen Niederdruckraum und einen Hochdruckraum. Der Niederdruckraum ist mit einer ersten Pumpeinrichtung verbunden, die die Druckfläche des Niederdruckkolbens mit unter Druck stehendem Medium beaufschlägt. Um die gewünschte Druckerhöhung im Hochdruckraum des Druckübersetzergehäuses zu erzielen, weist die Druckfläche des Hochdruckkolbens eine gegenüber der Druckfläche des Niederdruckkolbens verringerte Fläche auf. Der Hochdruckraum des Druckübersetzergehäuses ist über eine Verbindungsleitung zumindest mittelbar mit dem zu bearbeitenden Bauteil verbunden, wobei in dem Hochdruckraum (und der Verbindungsleitung) sich ebenfalls ein Medium befindet. Während des Betriebs des Druckübersetzers ist es erforderlich, den Hochdruckbereich, der bis an das Bauteil heranreicht, mit dem zweiten Medium zu befüllen bzw. nach der Bearbeitung das Medium aus dem Bereich des Bauteils zu entfernen. Hierzu dient eine mit dem Hochdruckbereich gekoppelte zweite Pumpeinrichtung, die unter Zwischenschaltung eines Ventils mit der Verbindungsleitung gekoppelt ist. Nachteilig dabei ist, dass die zweite Pumpeinrichtung zum Befüllen des Hochdruckbereichs bzw. des Hochdruckraums des Druckübersetzers durch den relativ geringen Querschnitt der Verbindungsleitung für das benötigte Füllvolumen eine relativ große Zeit benötigt. Darüber hinaus ist die angesprochene Ventileinrichtung erforderlich, die während der eigentlichen Druckbeaufschlagung bzw. des Betriebs des Druckübersetzers die Verbindung zwischen der zweiten Pumpeinrichtung und der Verbindungsleitung sperrt. Weiterhin hat es sich als nachteilig erwiesen, dass durch den relativ geringen Abstand des Anschlusses der Ventileinrichtung bzw. der zweiten Pumpeinrichtung zum Bauteil Verunreinigungen wie Späne o.ä. beim Einbringen des Füllvolumens von dem Bauteil in den Hochdruckraum des Druckübersetzers eingespült werden können, so dass es zu Funktionsbeeinträchtigungen kommen kann.

### Offenbarung der Erfindung

Ausgehend von dem dargestellten Stand der Technik liegt der Erfindung die Aufgabe zugrunde, einen Druckübersetzer sowie ein Verfahren zum Betreiben eines Druckübersetzers nach den Oberbegriffen der beiden unabhängigen Ansprüche derart weiterzubilden, dass die genannten Nachteile des Standes der Technik vermieden werden. Insbesondere soll der vorrichtungstechnische Aufwand verringert und die Betriebssicherheit erhöht werden.

Diese Aufgabe wird erfindungsgemäß bei einem Druckübersetzer mit den Merkmalen des Anspruchs 1 , und bei einem Verfahren mit den Merkmalen des Anspruchs 8 dadurch gelöst, dass die zweite Pumpeinrichtung mindestens einen Anschluss aufweist, der im Hochdruckraum des Druckübersetzergehäuses zwischen den beiden Umkehrpunkten des Hochdruckkolbens mündet, und dass der Anschluss in geringer Entfernung zum ersten Umkehrpunkt, insbesondere knapp oberhalb des unteren Totpunkts des Hochdruckkolbens im Druckübersetzergehäuse mündet und als Bohrung in der Wand des Druckübersetzergehäuses ausgebildet ist.

Es wird sich dabei die Überlegung zunutze gemacht, dass in dem Bereich des Hochdruckraums innerhalb des Druckübersetzers eine Befüllbohrung ausgebildet werden kann, die einen größeren Querschnitt aufweist als der Querschnitt der Verbindungsleitung vom Druckübersetzer zum Bauteil. Dadurch ist zur Erzielung einer gegenüber dem Stand der Technik gleichen Befüllzeit des Hochdruckraums des Druckübersetzers eine zweite Pumpeinrichtung mit gegenüber dem Stand der Technik reduzierter Pumpleistung erforderlich. Alternativ ist es selbstverständlich auch denkbar, die aus dem Stand der Technik bekannte zweite Pumpeinrichtung (unverändert) einzusetzen, so dass über die neue Anordnung der Verbindung mit dem Hochdruckraum eine schnellere Befüllung des Hochdruckraums des Druckübersetzers ermöglicht wird, was insbesondere beim industriellen Serieneinsatz der Erfindung für kürzere Taktzeiten sorgt. In Folge der kürzeren Taktzeiten ist dann beispielsweise lediglich die Verwendung einer geringeren Anzahl von Anlagen mit Druckübersetzern für die Bearbeitung einer bestimmten Anzahl von Bauteilen je Arbeitsschicht erforderlich, so dass sich die Investitionskosten insgesamt verringern lassen. Erfindungsgemäß ist darüber hinaus eine konstruktive Anordnung des Anschlusses knapp oberhalb des unteren Totpunkts des Hochdruckkolbens im Druckübersetzergehäuse vorgesehen. Dadurch wird es beim Betrieb des Druckübersetzers möglich, dass der Anschluss im Druckübersetzergehäuse bei einer Überschneidung mit dem Hochdruckkolben von dem Hochdruckkolben dichtend verschlossen ist. Dies hat den besonderen Vorteil, dass auf eine zusätzliche Ventileinrichtung, wie beim Stand der Technik, verzichtet werden kann, so dass sich die Investitionskosten weiter verringern und ein besonders sicherer Betrieb des Druckübersetzers ermöglicht wird, da sich die Anzahl der beteiligten Bauteile und Funktionsgruppen verringert.

Vorteilhafte Weiterbildungen des erfindungsgemäßen Druckübersetzers sind in den Unteransprüchen aufgeführt.

Es kann auch vorgesehen sein, dass eine dritte Pumpeinrichtung vorgesehen ist, die in der Verbindungsleitung zwischen dem Hochdruckraum und der zu bearbeitenden Oberfläche des Bauteils mündet. Diese dritte Pumpeinrichtung entspricht dann der zweiten Pumpeinrichtung beim Stand der Technik. Durch die Verwendung der dritten Pumpeinrichtung lässt sich die Taktzeit zusätzlich verringern. Es kann auch vorgesehen sein, dass die beiden, im Niederdruckraum und im Hochdruckraum verwendeten Medien unterschiedlich sind. Dadurch kann beispielsweise die Oberfläche des bearbeitenden Bauteils in besonders günstiger Weise beeinflusst, zum Beispiel zusätzlich oberflächenveredelt werden. Bei einem erfindungsgemäßen Verfahren zum Betreiben eines Druckübersetzers ist es vorgesehen, dass die zweite Pumpeinrichtung das zweite Medium über wenigstens einen Anschluss unmittelbar in den Hochdruckraum im Druckübersetzergehäuse in einen Bereich zwischen den beiden Umkehrpunkten des Hochdruckkolbens fördert, und dass ggf. die zweite Pumpeinrichtung und/oder eine dritte Pumpeinrichtung vorgesehen sind, die das zweite Medium zusätzlich in eine Verbindungsleitung zwischen dem Druckübersetzer und einem zu bearbeitenden Bauteil fördert.

Bevorzugt ist die Verwendung des Druckübersetzers zur Einbringung von Eigenspannungen in die Oberflächen von Bauteilen in Kraftstoffeinspritzsystemen im Autofrettageverfahren, insbesondere zur Druckbeaufschlagung von Leitungen oder Speicherelementen wie Rails in Dieseleinspritzsystemen.

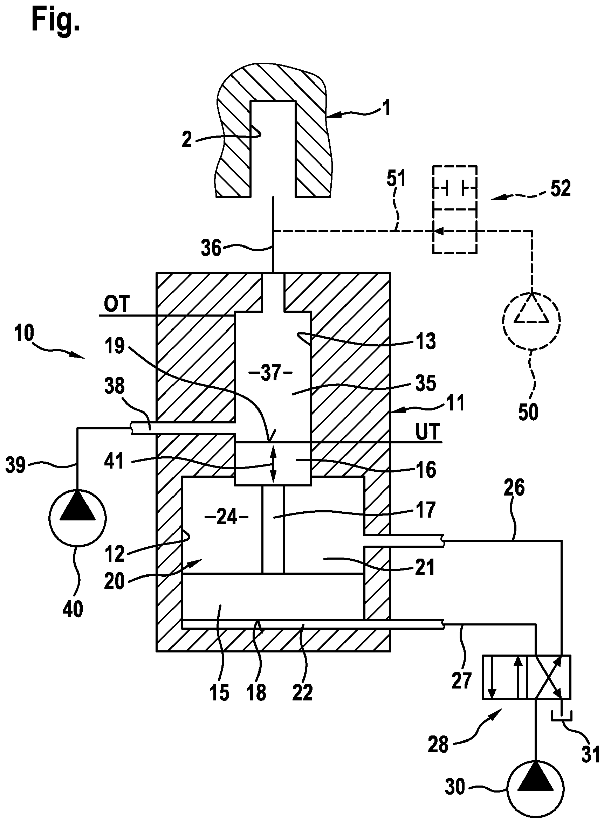

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in der einzigen Figur eine vereinfachte Darstellung einer Anordnung zur Druckbeaufschlagung einer zu bearbeitenden Oberfläche an einem Bauteil unter Verwendung eines erfindungsgemäßen Druckübersetzers.

In der einzigen Figur ist ein erfindungsgemäßer Druckübersetzer 10 zur Oberflächenbehandlung eines Bauteils 1 dargestellt. Bei dem Bauteil 1 handelt es sich insbesondere, jedoch nicht einschränkend, um ein Bauteil in einem Kraftstoffeinspritzsystem (vorzugsweise in einem Dieseleinspritzsystem), beispielsweise um eine Leitung oder ein Speicherelement, wie einem Rail, oder aber beispielsweise um ein Gehäuse eines Einspritzventils oder ähnliches. Im dargestellten Ausführungsbeispiel wird die Innengeometrie einer Bohrung 2 des Bauteils 1 druckbeaufschlagt, insbesondere mit einem Druck in einem Druckbereich von etwa 4000bar bis 12000bar. Eine derartige Druckbeaufschlagung von Bauteilen 1 ist unter dem Namen Autofrettageverfahren bekannt und dient der Erhöhung der Lebensdauer von Bauteilen 1.

Der erfindungsgemäße Druckübersetzer 10 weist ein Druckübersetzergehäuse 11 auf, in dem eine erste Bohrung 12 mit relativ großem Durchmesser und eine zweite Bohrung 13 mit gegenüber der ersten Bohrung 12 verringertem Durchmesser ausgebildet ist. Innerhalb der ersten Bohrung 12 ist ein Niederdruckkolben 15 und innerhalb der zweiten Bohrung 13 ein Hochdruckkolben 16 angeordnet. Der Niederdruckkolben 15 und der Hochdruckkolben 16 sind mittels einer Kolbenstange 17 starr miteinander verbunden. Dabei kann es in Abänderung des in der Figur dargestellten Ausführungsbeispiels vorgesehen sein, dass die Kolbenstange 17 denselben Durchmesser aufweist wie der Hochdruckkolben 16 bzw. der Hochdruckkolben 16 eine derartige Baulänge aufweist, dass dieser unmittelbar mit dem Niederdruckkolben 15 verbunden ist.

Es wird ergänzt, dass anstelle zweier, mit einer Kolbenstange 17 verbundenen Kolben auch anders ausgebildete Verbindungen zwischen den beiden Kolben ausgebildet sein können. Wesentlich ist lediglich, dass die beiden Kolben starr miteinander verbunden sind und eine translatorische und/oder rotatorische Hin- und Herbewegung zwischen zwei Umkehrpunkten, insbesondere einem oberen und einem unteren Totpunkt ermöglichen, wobei in einem der Umkehrpunkte ein gegenüber dem anderen Umkehrpunkt erhöhter druck erzeugt wird.

Der Niederdruckkolben 15 und der Hochdruckkolben 16 bilden auf einander abgewandten Seiten eine Niederdruckfläche 18 bzw. eine Hochdruckfläche 19 aus. Das Flächenverhältnis zwischen der Niederdruckfläche 18 und der Hochdruckfläche 19 bestimmt die Druckübersetzung des Druckübersetzers 10. Bevorzugt ist es vorgesehen, dass die Niederdruckfläche 18 mindestens die vierzigfache Fläche aufweist wie die Hochdruckfläche 19, so dass mittels des Druckübersetzers 10 eine Druckübersetzung von wenigstens 40 erreicht werden kann.

Beidseitig des Niederdruckkolbens 15 ist innerhalb des Druckübersetzergehäuses 11 ein Niederdruckraum 20 ausgebildet. Der Niederdruckraum 20 ist durch den Niederdruckkolben 15 in einen ersten Niederdruckbereich 21 und einen zweiten Niederdruckbereich 22 unterteilt. Innerhalb des Niederdruckraums 20 ist ein erstes Medium 24, beispielsweise eine Hydraulikflüssigkeit, enthalten. Der erste Niederdruckbereich 21 ist über eine erste Leitung 26 mit einem beispielhaft als 4/2-Wegeventil 28 ausgebildeten Ventil verbunden. Ebenso ist der zweite Niederdruckbereich 22 des Niederdruckraums 20 über eine zweite Leitung 27 mit dem 4/2-Wegeventil 28 verbunden. Eine erste Pumpeinrichtung 30 in Form einer Hochdruckpumpe dient der Druckbeaufschlagung der beiden Niederdruckbereiche 21, 22 über das 4/2-Wegeventil, das einen Rücklaufanschluss zu einem Behälter 31 für das erste Medium 24 aufweist.

Die Hochdruckfläche 19 begrenzt innerhalb des Druckübersetzergehäuses 11 einen Hochdruckraum 35, der über eine Verbindungsleitung 36 zumindest mittelbar mit dem Bauteil 1 bzw. der Innengeometrie der druckbeaufschlagten Bohrung 2 verbunden ist. Wesentlich hierbei ist, dass der Durchflussquerschnitt der Verbindungsleitung 36 kleiner ist als die Fläche der zweiten Druckfläche 19 im Hochdruckraum 35. Innerhalb des Hochdruckraums 35 bzw. der Verbindungsleitung 36 ist ein zweites Medium 37, beispielsweise ebenfalls eine Hydraulikflüssigkeit, angeordnet. Die beiden Medien 24, 37 bzw. Hydraulikflüssigkeiten können auch unterschiedlich sein.

Erfindungsgemäß ist es vorgesehen, dass in der die zweite Bohrung 13 begrenzenden Wand des Druckübersetzergehäuses 11 bzw. des Hochdruckraums 35 radial (in Bezug zur Längsachse der zweiten Bohrung 13) eine Anschlussbohrung 38 mündet, die beispielsweise über eine Leitung 39 mit einer zweiten Pumpeinrichtung 40 verbunden ist. Der zusammen mit dem Niederdruckkolben 15 in Richtung des Doppelpfeils 41 auf- und abbewegliche Hochdruckkolben 16 ist zwischen einem oberen Totpunkt OT und einem unteren Totpunkt UT positionsveränderbar. Erfindungsgemäß ist es besonders bevorzugt vorgesehen, dass die Anschlussbohrung 38, wie dargestellt, knapp oberhalb des unteren Totpunktes UT des Hochdruckkolbens 16 in dem Hochdruckraum 35 mündet.

Ergänzend wird erwähnt, dass die Anschlussbohrung 38 auch in einem separaten Bauteil, beispielsweise einer Zwischenplatte, oder einem in dem Druckübersetzergehäuse 11 angeordneten Bauteil ausgebildet sein kann.

Der soweit beschriebene erfindungsgemäße Druckübersetzer 10 arbeitet wie folgt: Zur Druckbeaufschlagung der Innengeometrie der Bohrung 2 des Bauteils 1 mit dem zweiten Medium 37 wird die Verbindungsleitung 36 mit der Bohrung 2 des Bauteils 1 bzw. der Innengeometrie der Bohrung 2 in Wirkverbindung angeordnet. Dann wird über die zweite Pumpeinrichtung 40 das zweite Medium 37 in den Hochdruckraum 35 gepumpt, wobei sich der Hochdruckkolben 16 nahe seinem unteren Totpunkt UT befindet. Durch die Befüllung des Hochdruckraums 35 mit dem zweiten Medium 37 gelangt dieses auch über die Verbindungsleitung 36 in die Bohrung 2. Sobald die Befüllung des Hochdruckraums 35 abgeschlossen ist und ein definierter Vordruck innerhalb des Hochdruckraumes bzw. dem Bauteil aufgebaut ist, wird das 4/2-Wegeventil 28 in eine Stellung verfahren, in der der zweite Niederdruckbereich 22 des Niederdruckraums 20 über die zweite Leitung 27 und die erste Pumpeinrichtung 30 mit dem ersten Medium 24 befüllt werden kann. Die Befüllung des zweiten Niederdruckbereichs 22 bewirkt, dass sich der Niederdruckkolben 15 zusammen mit dem Hochdruckkolben 16 aus ihrer ursprünglichen Lage bewegt, wobei der Hochdruckkolben 16 bei seiner Bewegung in Richtung des oberen Totpunkts OT unmittelbar nach Bewegungsbeginn die Anschlussbohrung 38 verschließt und dabei abdichtet.

Wesentlich dabei ist, dass durch eine entsprechende geometrische Dimensionierung des Hochdruckkolbens 16 und/oder der Kolbenstange 17 während der gesamten Bewegung des Hochdruckkolbens 16 in Richtung des oberen Totpunkts OT gewährleistet ist, dass die Anschlussbohrung 38 verschlossen ist. Der Hochdruckkolben 16 und/oder die Kolbenstange 17 wirken somit in Art einer Ventileinrichtung bzw. als Verschluss für die Anschlussbohrung 38.

Durch die Kompression des zweiten Mediums 37 im Hochdruckraum 35 wird dieses auch in der Verbindungsleitung 36 sowie im Bereich der Oberfläche der Bohrung 2 in gewünschter Art und Weise verdichtet bzw. in seinem Druck erhöht.

Ist die Behandlung der Innengeometrie der Bohrung 2 beendet, so wird das 4/2-Wegeventil 28 derart geschaltet, dass der zweite Niederdruckbereich 22 Verbindung mit dem Behälter 31 hat, während der erste Niederdruckbereich 21 über die erste Pumpeinrichtung 30 mit Druck beaufschlagt wird. Dadurch bewegt sich der Niederdruckkolben 15 zusammen mit dem Hochdruckkolben 16 wieder in seine ursprüngliche Lage zurück, wobei der Hochdruckkolben 16 im Bereich nahe seines unteren Totpunkts UT die Anschlussbohrung 38 freigibt, so dass das zweite Medium 37 aus dem Hochdruckraum 35 abströmen kann, wodurch gleichzeitig die Verbindungsleitung 36 sowie die Oberfläche des Bauteils 1 bzw. der Bohrung 2 druckentlastet wird.

In Abänderung des dargestellten und beschriebenen Ausführungsbeispiels kann es auch vorgesehen sein, dass eine dritte Pumpeinrichtung 50 über eine Verbindungsleitung 51 mit zwischengeschaltetem 4/2-Wegeventil 52 mit der Verbindungsleitung 36 verbunden ist. Die dritte Pumpeinrichtung 50 kann zur aktiven Befüllung des Hochdruckraums 35 bzw. der Verbindungsleitung 36 dienen, wie dies durch die zweite Pumpeinrichtung 40 geschieht, um die Taktzeiten zusätzlich zu verringern.

Der soweit beschriebene Druckübersetzer 10 kann in vielfältiger Art und Weise abgewandelt bzw. modifiziert werden, ohne vom Erfindungsgedanken abzuweichen. Dieser besteht darin, die Verbindung der zweiten Pumpeinrichtung 40 mit dem Hochdruckraum 35 des Druckübersetzers 10 im Bereich des Hochdruckraums 35 über eine in den Hochdruckraum 35 knapp oberhalb des unteren Totpunkts UT des Hochdruckkolbens 16 mündende Anschlussbohrung 38 zu realisieren. So kann es beispielsweise vorgesehen sein, dass die zweite Pumpeinrichtung 40 zusätzlich, oder anstelle der dritten Pumpeinrichtung 50 mit der Verbindungsleitung 36 verbunden ist.

## Patentansprüche

1. Druckübersetzer (10), mit einem Druckübersetzergehäuse (11), in dem ein Niederdruckkolben (15) mit einer ersten Druckfläche (18) im Druckübersetzergehäuse (11) angeordnet ist, der einen ersten Niederdruckbereich (22) in einem Niederdruckraum (20) begrenzt, mit einem Hochdruckkolben (16), der eine gegenüber der ersten Druckfläche (18) kleinere zweite Druckfläche (19) aufweist und im Druckübersetzergehäuse (11) einen Hochdruckraum (35) begrenzt, wobei der Niederdruckkolben (15) mit dem Hochdruckkolben (16) gekoppelt ist, wobei der erste Niederdruckbereich (22) mit einer ersten Pumpeinrichtung (30) verbunden ist, die die erste Druckfläche (18) mit einem ersten Medium (24) beaufschlagt, wobei der Hochdruckkolben (16) zwischen einem ersten Umkehrpunkt als einem unteren Totpunkt (UT) und einem zweiten Umkehrpunkt als einem oberen Totpunkt (OT) bewegbar ist, und mit einer zweiten Pumpeinrichtung (40) für ein zweites Medium (37), die mit dem Hochdruckraum (35) zumindest mittelbar verbunden ist,
**dadurch gekennzeichnet,**
**dass** die zweite Pumpeinrichtung (40) mindestens einen Anschluss (38) aufweist, der im Hochdruckraum (35) des Druckübersetzergehäuses (11) zwischen den beiden Umkehrpunkten des Hochdruckkolbens (16) mündet, und dass der Anschluss (38) in geringer Entfernung zum ersten Umkehrpunk knapp oberhalb des unteren Totpunkts (UT) des Hochdruckkolbens (16) im Druckübersetzergehäuse (11) mündet und als Bohrung in der Wand des Druckübersetzergehäuses (11) ausgebildet ist.

2. Druckübersetzer nach Anspruch 1,
**dadurch gekennzeichnet,**
**dass** der Anschluss (38) im Druckübersetzergehäuse (11) bei einer Überschneidung mit dem Hochdruckkolben (16) von dem Hochdruckkolben (16) dichtend verschlossen ist.

3. Druckübersetzer nach Anspruch 1 oder 2,
**dadurch gekennzeichnet,**
**dass** der Niederdruckkolben (15) und der Hochdruckkolben (16) mittels einer Kolbenstange (17) starr miteinander verbunden sind, und dass die beiden Druckflächen (18, 19) auf einander gegenüberliegenden Seiten des Niederdruckkolbens (15) und des Hochdruckkolbens (16) angeordnet sind.

4. Druckübersetzer nach einem der Ansprüche 1 bis 3,
**dadurch gekennzeichnet,**
**dass** eine dritte Pumpeinrichtung (50) und/oder die zweite Pumpeinrichtung (40) in Wirkverbindung mit einer Verbindungsleitung (36) zwischen dem Hochdruckraum (35) des Druckübersetzergehäuses (11) und der zu bearbeitenden Oberfläche des Bauteils (1) angeordnet ist.

5. Druckübersetzer nach Anspruch 4,
**dadurch gekennzeichnet,**
**dass** zwischen der Verbindungsleitung (36) und der dritten Pumpeinrichtung (50) ein Wegeventil (52) geschaltet ist.

6. Druckübersetzer nach einem der Ansprüche 1 bis 5,
**dadurch gekennzeichnet,**
**dass** das Flächenverhältnis der ersten zur zweiten Druckfläche (18, 19) größer als 40 ist, und dass der Druck beim Betrieb des Druckübersetzers (10) im Bereich der Verbindungsleitung (36) zwischen 4000bar und 12000bar beträgt.

7. Druckübersetzer nach einem der Ansprüche 1 bis 6,
**dadurch gekennzeichnet,**
**dass** die beiden Medien (24, 37) unterschiedlich sind.

8. Verfahren zum Betreiben eines Druckübersetzer (10), bei dem in einem Druckübersetzergehäuse (11) ein zwischen einem ersten Umkehrpunkt als einem unteren Totpunkt (UT) und einem zweiten Umkehrpunkt als einem oberen Totpunkt (OT), bewegbarer
Hochdruckkolben (16) und ein mit dem Hochdruckkolben (16) verbundener Niederdruckkolben (15) angeordnet sind, wobei durch den Hochdruckkolben (16) in dem Druckübersetzergehäuse (11) ein Hochdruckraum (35) und durch den Niederdruckkolben (16) in dem Druckübersetzergehäuse (11) ein Niederdruckraum (20) begrenzt ist, wobei der Niederdruckkolben (15) in Wirkverbindung mit einer ersten Pumpeinrichtung (30) für ein erstes Medium (24) angeordnet ist, und wobei eine zweite Pumpeinrichtung (40) für ein zweites Medium (37) vorgesehen ist, die zumindest mittelbar in Wirkverbindung mit dem Hochdruckraum (35) angeordnet ist,
**dadurch gekennzeichnet,**
**dass** die zweite Pumpeinrichtung (40) das zweite Medium (37) über wenigstens einen Anschluss (38) unmittelbar in den Hochdruckraum (35) im Druckübersetzergehäuse (11) in einen Bereich zwischen den beiden Umkehrpunkten des Hochdruckkolbens (16) fördert, der in geringer Entfernung zum ersten Umkehrpunkt knapp oberhalb des unteren Totpunkts (UT) des Hochdruckkolbens (16) im Druckübersetzergehäuse (11) mündet und als Bohrung in der Wand des Druckübersetzergehäuses (11) ausgebildet ist, und dass ggf. die zweite Pumpeinrichtung (40) und/oder eine dritte Pumpeinrichtung (50) vorgesehen sind, die das zweite Medium (37) zusätzlich in eine Verbindungsleitung (36) zwischen dem Druckübersetzer (10) und einem zu bearbeitenden Bauteil (1) fördert.

9. Verwendung eines Druckübersetzers (10) nach einem der Ansprüche 1 bis 7 zur Behandlung von Oberflächen von druckbeaufschlagten Bauteilen (1) von Kraftstoffeinspritzsystemen im Autofrettageverfahren, insbesondere zur Druckbeaufschlagung von Leitungen oder Speicherelementen wie Rails in Dieseleinspritzsystemen.

## Claims

1. Pressure booster (10), having a pressure booster housing (11) in which a low-pressure piston (15) with a first pressure surface (18) is arranged in the pressure booster housing (11), which low-pressure piston delimits a first low-pressure region (22) in a low-pressure chamber (20), having a high-pressure piston (16) which has a second pressure surface (19) smaller than the first pressure surface (18) and which delimits a high-pressure chamber (35) in the pressure booster housing (11), wherein the low-pressure piston (15) is coupled to the high-pressure piston (16), wherein the first low-pressure region (22) is connected to a first pump device (30) which implies a first medium (24) to the first pressure surface (18), wherein the high-pressure piston (16) is movable between a first reversal point as a bottom dead centre (UT) and a second reversal point as a top dead centre (OT), and having a second pump device (40) for a second medium (37), which second pump device is at least indirectly connected to the high-pressure chamber (35),
**characterized**
**in that** the second pump device (40) has at least one port (38) which opens into the high-pressure chamber (35) of the pressure booster housing (11) between the two reversal points of the high-pressure piston (16), and in that the port (38) opens into the pressure booster housing (11) at a short distance from the first reversal point slightly above the bottom dead centre (UT) of the high-pressure piston (16) and is formed as a bore in the wall of the pressure booster housing (11).

2. Pressure booster according to Claim 1,
**characterized**
**in that** the port (38) in the pressure booster housing (11) is sealingly closed off by the high-pressure piston (16) when overlapped by the high-pressure piston (16).

3. Pressure booster according to Claim 1 or 2,
**characterized**
**in that** the low-pressure piston (15) and the high-pressure piston (16) are rigidly connected to one another by means of a piston rod (17), and in that the two pressure surfaces (18, 19) are arranged on mutually opposite sides of the low-pressure piston (15) and of the high-pressure piston (16).

4. Pressure booster according to any of Claims 1 to 3, **characterized**
**in that** a third pump device (50) and/or the second pump device (40) are arranged so as to be operatively connected to a connecting line (36) between the high-pressure chamber (35) of the pressure booster housing (11) and that surface of the component (1) which is to be machined.

5. Pressure booster according to Claim 4,
**characterized**
**in that** a directional valve (52) is connected between the connecting line (36) and the third pump device (50).

6. Pressure booster according to any of Claims 1 to 5, **characterized**
**in that** the area ratio of the first to the second pressure surface (18, 19) is greater than 40, and in that the pressure in the region of the connecting line (36) during the operation of the pressure booster (10) amounts to between 4,000 bar and 12,000 bar.

7. Pressure booster according to any of Claims 1 to 6, **characterized**
**in that** the two media (24, 37) are different.

8. Method for operating a pressure booster (10), in which, in a pressure booster housing (11), there are arranged a high-pressure piston (16), which is movable between a first reversal point as a bottom dead centre (UT) and a second reversal point as a top dead centre (OT), and a low-pressure piston (15) connected to the high-pressure piston (16), wherein the high-pressure piston (16) delimits a high-pressure chamber (35) in the pressure booster housing (11) and the low-pressure piston (16) delimits a low-pressure chamber (20) in the pressure booster housing (11), wherein the low-pressure piston (15) is arranged so as to be operatively connected to a first pump device (30) for a first medium (24), and wherein a second pump device (40) for a second medium (37) is provided, which second pump device is arranged so as to be at least indirectly operatively connected to the high-pressure chamber (35),
**characterized**
**in that** the second pump device (40) delivers the second medium (37) via at least one port (38) directly into the high-pressure chamber (35) in the pressure booster housing (11) into a region between the two reversal points of the high-pressure piston (16), which port opens into the pressure booster housing (11) at a short distance from the first reversal point slightly above the bottom dead centre (UT) of the high-pressure piston (16) and is formed as a bore in the wall of the pressure booster housing (11), and in that the second pump device (40) and/or a third pump device (50) are possibly provided, which delivers the second medium (37) additionally into a connecting line (36) between the pressure booster (10) and a component (1) to be machined.

9. Use of a pressure booster (10) according to any of Claims 1 to 7 for the treatment of surfaces of pressurized components (1) of fuel injection systems in an autofrettage process, in particular for the pressurization of lines or accumulator elements such as rails in diesel injection systems.

## Revendications

1. Surpresseur (10) comprenant un boîtier (11), dans lequel est disposé un piston à basse pression (15) qui présente une première surface de pression (18) et qui délimite une première région à basse pression (22) dans un espace à basse pression (20), un piston à haute pression (16) qui présente une deuxième surface de pression (19), plus petite que la première de pression (18), et que délimite un espace à haute pression (35) dans le boîtier de surpresseur (11), le piston à basse pression (15) étant accouplé au piston à haute pression (16), la première région à basse pression (22) étant raccordée à une moyen de pompage (30) qui agit sur la première surface de pression (18) avec un premier milieu (24), le piston à haute pression (16) étant mobile entre un premier point d'inversion faisant office de point mort inférieur (UT) et un deuxième point d'inversion faisant office de point mort supérieur (OT), et un deuxième moyen de pompage (40) destiné à un deuxième milieu (37) et relié au moins indirectement à l'espace à haute pression (35), **caractérisé en ce que**
le deuxième moyen de pompage (40) comporte au moins un raccord (38) qui débouche dans l'espace à haute pression (35) du boîtier (11) entre les deux points d'inversion du piston à haute pression (16), et **en ce que**
le raccord (38) débouche à une courte distance du premier point d'inversion juste au-dessus du point mort inférieur (UT) du piston à haute pression (16) dans le boîtier (11) et est conçu sous la forme d'un trou ménagé dans la paroi du boîtier (11).

2. Surpresseur selon la revendication 1,
**caractérisé en ce que**
le raccord (38) dans le boîtier (11) est fermée de manière étanche par le piston à haute pression (16) en cas d'intersection avec le piston à haute pression (16) .

3. Surpresseur selon la revendication 1 ou 2,
**Caractérisé en ce que**
le piston à basse pression (15) et le piston à haute pression (16) sont reliés rigidement l'un à l'autre au moyen d'une barre de piston (17) et **en ce que** les deux surfaces de pression (18, 19) sont disposées sur des côtés opposés du piston à basse pression (15) et du piston à haute pression (16).

4. Surpresseur de pression selon l'une des revendications 1 à 3,
**caractérisé en ce que**
un troisième moyen de pompage (50) et/ou le deuxième moyen de pompage (40) sont disposés en liaison fonctionnelle avec une conduite de liaison (36) entre l'espace à haute pression (35) du boîtier (11) et la surface à traiter du composant (1).

5. Surpresseur de pression selon la revendication 4, **caractérisé en ce que**
un distributeur (52) est monté entre la conduite de liaison (36) et le troisième dispositif de pompage (50) .

6. Surpresseur selon l'une des revendications 1 à 5, **caractérisé en ce que**
le rapport de surface de la première à la deuxième surface de pression (18, 19) est supérieur à 40, et **en ce que**
la pression pendant le fonctionnement du surpresseur (10) dans la région de la conduite de liaison (36) est comprise entre 4000 bars et 12000 bars.

7. Surpresseur selon l'une des revendications 1 à 6, **caractérisé en ce que** les deux milieux (24, 37) sont différents.

8. Procédé de fonctionnement d'un surpresseur (10), dans lequel un piston haute pression mobile (16) mobile entre un premier point d'inversion faisant office de point mort inférieur (UT) et un deuxième point d'inversion faisant office de point mort supérieur (PMH) et un piston à basse pression (15) relié au piston à haute pression (16) sont disposé dans un boîtier (11), un espace à haute pression (35) étant délimité par le piston à haute pression (16) dans le boîtier (11) et un espace à basse pression (20) étant délimité par le piston à basse pression (16) dans le boîtier (11), le piston à basse pression (15) étant disposé en liaison fonctionnelle avec un premier moyen de pompage (30) destiné à un premier milieu (24) et un deuxième moyen de pompage (40) destiné à un deuxième milieu (37) étant prévu qui est disposé au moins indirectement en liaison fonctionnelle avec l'espace à haute pression (35),
**caractérisé en ce que**
le deuxième moyen de pompe (40) acheminant le deuxième milieu (37) par le biais d'au moins un raccord (38) directement dans l'espace à haute pression (35) du boîtier (11) dans une région qui est située entre les deux points d'inversion du piston à haute pression (16) et qui débouche à courte distance du premier point d'inversion juste au-dessus du point mort inférieur (UT) du piston à haute pression (16) dans le boîtier (11) et qui est conçue sous la forme d'un trou ménagé dans la paroi du boîtier (11), et **en ce que** le deuxième moyen de pompage (40) et/ou un troisième moyen de pompe (50) sont éventuellement prévus qui acheminent en outre le deuxième milieu (37) dans une conduite de liaison (36) entre le surpresseur (10) et un composant (1) à traiter.

9. Utilisation d'un surpresseur (10) selon l'une des revendications 1 à 7 pour le traitement de surfaces de composants sous pression (1) de systèmes d'injection de carburant dans le procédé d'auto-frettage, en particulier pour la mise sous pression de conduites ou d'éléments de stockage tels que des rampes dans des systèmes d'injection diesel.
